# EUROPÄISCHE PATENTSCHRIFT

(11) **EP 0 356 789 B1**
(45) Veröffentlichungstag und Bekanntmachung des Hinweises auf die Patenterteilung: **14.07.1993**
(21) Anmeldenummer: 89114899.1
(22) Anmeldetag: 11.08.1989
(51) Int. Cl.: H01H 21/50, B60Q 1/42

(54) **Elektrischer Schalter, insbesondere Lenkstockschalter für Kraftfahrzeuge**
Electrical switch, particularly steering-column switch for vehicle
Interrupteur électrique, en particulier monté sur la colonne de direction d'un véhicule

(30) Priorität: 27.08.1988 DE 3829109
(43) Veröffentlichungstag der Anmeldung: 07.03.1990
(73) Patentinhaber: SWF Auto-Electric GmbH, D-74321 Bietigheim-Bissingen (DE)
(72) Erfinder: Hofmann, Georg, D-7100 Heilbronn-Horkheim (DE)
(74) Vertreter: Portwich, Peter

(56) Entgegenhaltungen:
- EP-A- 0 231 924
- DE-A- 3 211 672
- DE-A- 3 304 942
- DE-B- 2 349 886

## Beschreibung

Die Erfindung geht aus von einem elektrischen Schalter, der die Merkmale aus dem Oberbegriff des Anspruchs 1 aufweist. Insbesondere betrifft die Erfindung einen Lenkstockschalter für Kraftfahrzeuge und geht aus von der DE-A-36 03 820.

In elektrischen Schaltern werden die Schaltstellungen eines Schaltglieds, insbesondere wenn dieses mehr als zwei Schaltstellungen besitzt, meist durch eine Rastkurve und durch einen daran anliegenden Rastnocken bestimmt. Die Rastkurve ist üblicherweise gehäusefest angeordnet, während der Rastnocken in einer Aufnahme des Schaltglieds geführt und federnd am Schaltglied abgestützt ist (z.B. DE-A-32 11 672). Mit solchen Rastsystemen lassen sich nur schwer ein geräuscharmes Schalten und spielfreie Schaltstellungen des Schaltglieds verwirklichen, denn entstehende Geräusche werden unmittelbar auf das Schaltergehäuse übertragen und die Führung des Rastbolzens im Schaltglied ist nicht spielfrei.

Deshalb werden seit einiger Zeit Rastsysteme mit Rasthebeln verwendet, die gegen die Kraft von Federmitteln verschwenkbar im Gehäuse gelagert sind. Am Rasthebel befindet sich die Rastkurve oder der Rastnocken, das Gegenstück dazu ist fest am Schaltglied ausgebildet. Der Rasthebel kann weitgehend spielfrei im Gehäuse gelagert werden. Insbesondere ist dies dann möglich, wenn er ein Filmscharnier aufweist, das einen verschwenkbaren Abschnitt des Rasthebels mit einem Befestigungsabschnitt verbindet und durch das eine Schwenkachse des Rasthebels erzeugt wird. Bei einem Rastsystem mit einem Rasthebel der beschriebenen Art ist auch ein geräuschärmeres Schalten möglich.

Aus der DE-A-32 11 672 ist des weiteren ein elektrischer Schalter bekannt, bei dem sich die Rastkurve am Schaltglied und der Rastnocken am Rasthebel befinden. Nachteilig an dieser Ausführung eines elektrischen Schalters ist es, daß das Schaltglied im Bereich der Rastkurve sehr breit baut und viel Platz im Schaltergehäuse benötigt, der nicht immer zur Verfügung steht.

Durch die DE-B-23 49 886 ist ein elektrischer Schalter ähnlicher Art bekannt geworden, bei welchem zugleich mit dem ringförmigen Schaltglied am Schalthebel eine Rastvorrichtung mitverschwenkt wird. Sie besteht aus einem hülsenförmigen, mit dem ringförmigen Schaltglied bewegungsmäßig verbundenen Ansatz, in dessen Innerem sich eine Druckfeder befindet, deren beide Enden an jeweils einem Rastelement anliegen so daß dieses gegen jeweils eine Teilschaltkurve des feststehenden Schalterteils gedrückt wird. Dadurch ist ausgehend von einer Mittelstellung links und rechts gelegen jeweils wenigstens eine weitere Raststellung möglich. Der Platzbedarf ist dabei entsprechend groß und außerdem ist auch dieses System nicht geräuscharm. Die beim Verrasten entstehenden Schaltgeräusche werden unmittelbar auf das Schaltergehäuse übertragen, was vom Benutzer unangenehm empfunden wird.

Ein elektrischer Schalter mit den Merkmalen aus dem Oberbegriff des Anspruchs 1, nach denen sich die Rastkurve am Rasthebel und der Rastnocken am Schaltglied befindet, ist in der DE-OS 36 03 820 gezeigt. Bei dem Schalter aus dieser Schrift ist der Rasthebel an einer bestimmten Stelle an seinem Rücken von einer Blattfeder abgestützt, die im Gehäuse befestigt ist. Bei einem solchen elektrischen Schalter ist für den Rastnocken nur wenig Platz am Schaltglied notwendig. Es hat sich nun jedoch gezeigt, daß sich insbesondere unter dem Einfluß von Wärme die Schaltcharakteristik des Rastsystems verändert. Außerdem erhält man unter Umständen deutlich unterschiedliche Schaltmomente zwischen den einzelnen Schaltstellungen.

Der Erfindung liegt die Aufgabe zugrunde, einen elektrischen Schalter mit den Merkmalen aus dem Oberbegriff des Anspruchs 1 hinsichtlich des Rastsystems zu verbessern.

Diese Aufgabe wird erfindungsgemäß durch einen elektrischen Schalter gelöst, der die Merkmale aus dem Oberbegriff des Anspruchs 1 aufweist und bei dem zusätzlich die Federmittel bei einer Verstellung des Schaltglieds mit dem Rastnocken entlang des Rasthebels bewegt werden. Bei einem solchen elektrischen Schalter werden also beim Schalten sowohl der Rastnocken als auch die Federmittel relativ zum Rasthebel bewegt und dadurch die Schaltmomente zwischen verschiedenen Schaltstellungen auf einfache Weise aneinader angeglichen.

Vorteilhafte Ausgestaltungen eines erfindungsgemäßen elektrischen Schalters kann man den Unteransprüchen entnehmen.

So ist er besonders vorteilhaft, wenn die Federmittel gemäß Anspruch 2 wenigstens annähernd gleichweit wie der Rastnocken von der Schwenkachse des Rasthebels entfernt an diesem angreifen. Dadurch wird erreicht, daß sich die in den verschiedenen Schaltstellungen verschieden langen Hebellängen nicht mehr auf die Schaltmomente auswirken. Da nun der Rasthebel genau dort abgestützt ist, wo ihn der Rastnocken belastet, erzeugt der Rastnocken kein Biegemoment am Rasthebel mehr, so daß dieser auch unter Wärmeeinwirkung seine Form beibehält und die Schaltcharakteristik des Rastsystems erhalten bleibt.

Bevorzugt wird eine Ausführung, bei der die Federmittel derart am Schaltglied gehalten sind, daß sie bei einer Verstellung des Schaltglieds von diesem mitgenommen werden. Es wird also das Schaltglied, das ohnehin bei jeder Umschaltung verstellt wird, dazu benutzt, die Federmittel zu bewegen.

Vorteilhafterweise stützen sich die Federmittel, die einerseits am Rasthebel angreifen, andererseits am Schaltglied ab. Da die Federmittel den Rasthebel gegen den Rastnocken drücken, sich letztendlich also beidseitig am Schaltglied abstützen, belasten sie nicht mehr die Lagerstelle des Schaltglieds. Es ist günstig, wenn sich gemäß Anspruch 6 die Rastkurve an der der Lagestelle des Schaltglieds abgewandten Seite des Rasthebels befindet, das Schaltglied den Rasthebel mit dem Rastnocken umgreift und die Federmittel auf der der Lagerstelle des Schaltglieds zugewandten Seite des Rasthebels angeordnet sind. Auf diese Weise sind die Federmittel sehr platzsparend untergebracht.

Damit sich die von den Federmitteln ausgeübte Kraft nicht von Schaltstellung zu Schaltstellung zu sehr ändert, wird gemäß Anspruch 8 die Angriffsstelle der Federmittel am Rasthebel bei einer Verschwenkung des Schaltglieds zwischen mindestens zwei benachbarten Schaltstellungen auf einem Kreisbogen verschoben, dessen Mittelpunkt in den beiden Schaltstellungen auf der Drehachse des Schaltglieds liegt. Da während der Verschwenkung des Schaltglieds auch der Rasthebel verschwenkt wird, ist der Mittelpunkt des Kreisbogens während der Verschwenkung gegenüber der Drehachse des Schaltglieds versetzt. Bevorzugt weist der Rasthebel eine zylindrische Anlagefläche für die Federmittel auf. Die Achse dieser zylindrischen Anlagefläche fällt dann in den beiden Schaltstellungen mit der Drehachse des Schaltglieds zusammen.

Die Federmittel werden vorteilhafterweise von einer Schraubenfeder gebildet, die sich in einer Sackbohrung des Schaltglieds befindet.

Zwei Ausführungsbeispiele eines erfindungsgemäßen elektrischen Schalters sind in den Zeichnungen dargestellt. Anhand der Fig. dieser Zeichnungen wird die Erfindung nun näher erläutert.

Es zeigen
- Fig. 1: das erste Ausführungsbeispiel, bei dem der Rasthebel von einer am Schaltglied befestigten Blattfeder abgestützt ist,
- Fig. 2: das zweite Ausführungsbeispiel, bei dem der Rasthebel von einer Schraubendruckfeder abgestützt wird, die im Schaltglied zwischen dem Rasthebel und der Lagerstelle des Schaltglieds angeordnet ist,
- Fig.3: eine Ansicht in Richtung des Pfeiles A aus Fig. 2.

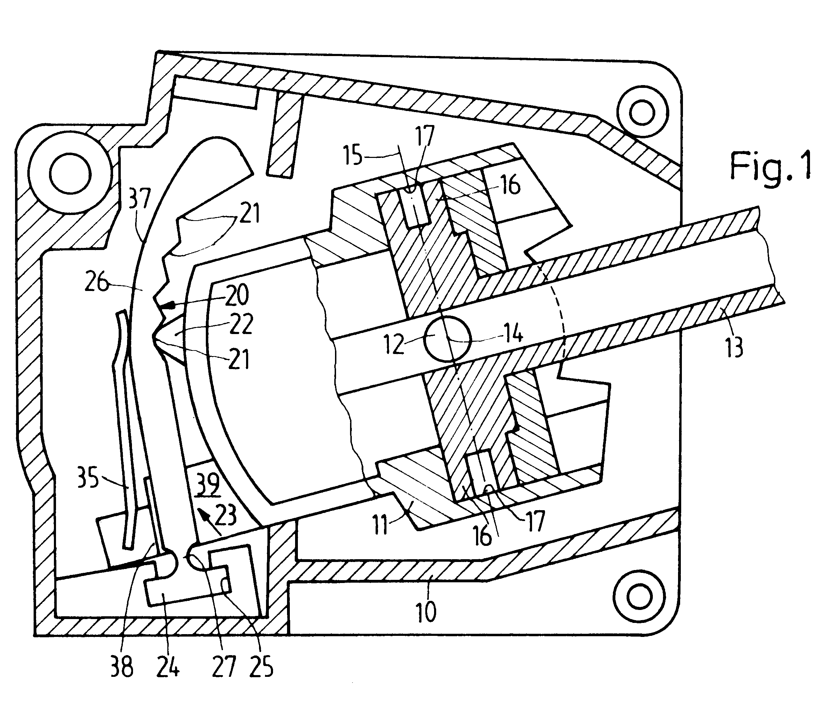

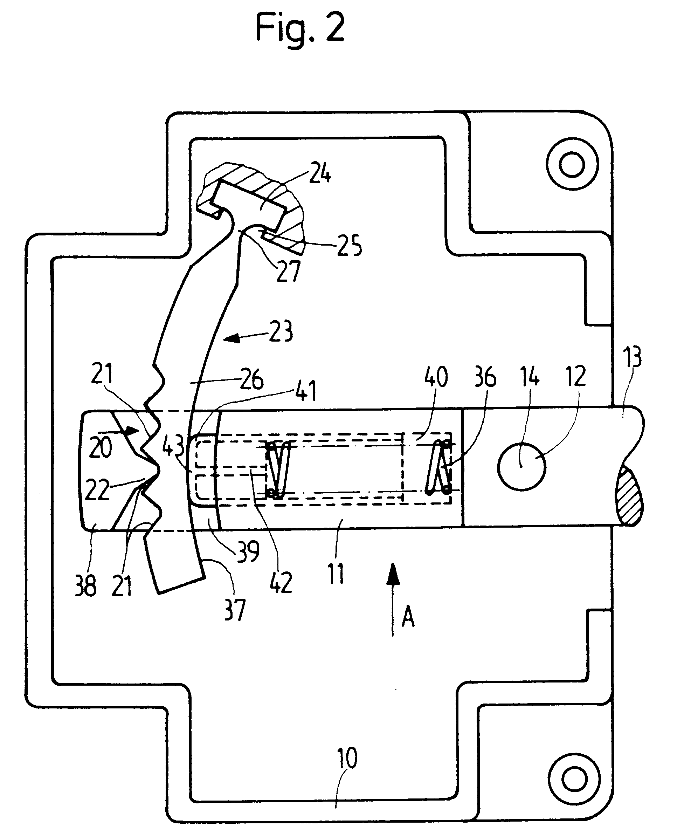

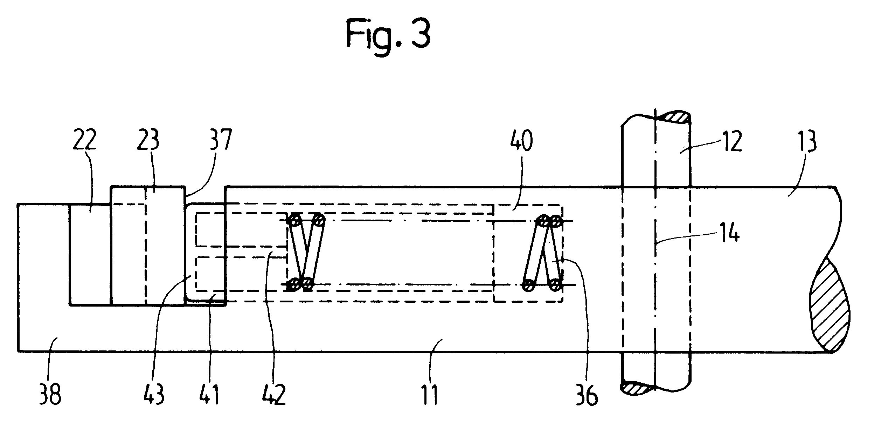

Die in den Fig. dargestellten elektrischen Schalter besitzen ein Gehäuse 10, in denen ein Schaltglied 11 über Lagerzapfen 12 so gelagert ist, daß es mit Hilfe eines Schalthebels 13 in der Zeichenebene nach den Fig. 1 und 2 verschwenkt werden kann. Der Schalthebel 13 kann, wie bei der Ausführung nach den Fig. 2 und 3, einstückig mit dem Schaltglied 11 hergestellt sein. Er kann jedoch auch, wie bei dem Ausführungsbeispiel nach Fig. 1, ein zweites Bauteil sein, das gegenüber dem Schaltglied um eine durch die Achse 14 der Lagerzapfen 12 senkrecht hindurchgehende Achse 15 verschwenkbar ist. Bei der Ausführung nach Fig. 1 ist der Schalthebel 13 dazu mit zwei Lagerzapfen 16 in zwei Lageraufnahmen 17 des Schaltglieds 11 gelagert.

Bezüglich der Achse 14 kann das Schaltglied 11 der gezeigten Schalter vier Raststellungen, das heißt, vier stabile Schaltstellungen einnehmen, zwischen denen das Schaltglied nur unter Einwirkung einer äußeren Kraft wechselt. Die vier Schaltstellungen werden bestimmt von einer Rastkurve 20, die vier spitze Einschnitte 21 aufweist, und von einem Rastnocken 22, der einstückig am Schaltglied 11 sitzt, in jeder Schaltstellung in einen der Einschnitte 21 hineingreift und beim Schalten, an der Rastkurve 20 entlangfahrend, von einem Einschnitt 21 in einen anderen Einschnitt 21 wechselt. Die Rastkurve 20 befindet sich an einem Rasthebel 23, der sich im wesentlichen aus drei Abschnitten zusammensetzt. Ein erster Abschnitt 24 des Rasthebels steckt fest in einer Aufnahme 25 des Gehäuses 10. Ein zweiter Abschnitt 26 ist mit der Rastkurve 20 versehen und über ein Filmscharnier 27, das als dritter Abschnitt zu betrachen ist, mit dem Befestigungsabschnitt 24 verbunden. Der Abschnitt 26 ist also aufgrund des Filmscharniers 27 gegenüber dem Befestigungsabschnitt 24 verschwenkbar. Und zwar ist der Rasthebel 23 insgesamt so angeordnet, daß sein Abschnitt 26 in einer zur Achse 14 des Schaltglieds 11 senkrechten Ebene verschwenkt werden kann.

Bei der Ausführung nach Fig. 1 wird der verschwenkbare Abschnitt 26 des Rasthebels 23 von einer Blattfeder 35 und bei der Ausführung nach den Fig. 2 und 3 von einer Schraubenfeder 36 gegen den Rastnocken 22 des Schaltglieds 11 gedrückt.

In den Fig. 1 und 2 erkennt man den Rastnocken 22 in einem Einschnitt 21 der Rastkurve 20. Schaltglied 11 und Schalthebel 13 nehmen also bezüglich der Achse 14 eine stabile Schaltstellung ein. Beim Umschalten bewegt sich der Rastnocken 22 an der Rastkurve 20 entlang und drückt dabei den Rasthebel 23 entgegen der Kraft der Feder 35 bzw. 36 von sich weg, bis er die Spitze zwischen zwei Einschnitten 21 überwunden hat. Dann gelangt der Rastnocken 22 aufgrund der Kraft der Feder 35 bzw. 36 von selbst in den nächsten Einschnitt 21 und nimmt dabei das Schaltglied 11 mit.

Wie man aus den Fig. 1 und 2 erkennt, liegt die Feder 35 bzw. 36 eines Ausführungsbeispiels an dem der Rastkurve 20 abgewandten Rücken 37 des Rasthebels 23 dem Rastnocken 22 genau gegenüberliegend an. Die Angriffspunkte des Rastnockens 22 und der Feder 35 bzw. 36 sind also vom Filmscharnier 27 und damit von der Schwenkachse des Rasthebels 23 gleichweit entfernt. Das Filmscharnier 27 und der Befestigungsabschnitt 24 sind somit kraftfrei. An der gegenseitigen Zuordnung zwischen Rastnocken 22 und Feder 35 bzw. 36 ändert sich auch nichts beim Umschalten des Schaltglieds 11. Denn die Feder 35 bzw. 36 ist am Schaltglied 11 angeordnet und gehalten und wird beim Umschalten zusammen mit dem Rastnocken 22 entlang des Rückens 37 des Rasthebels 23 bewegt.

In den verschiedenen Schaltstellungen des Schaltglieds 11 nimmt der Rasthebel 23 jeweils die gleiche Lage im Gehäuse 10 ein. Der Rücken 37 des Rasthebels 23 wird in dem Bereich, in dem die Feder 35 bzw. 36 auf ihm entlanggleitet, von einer zylindrischen Fläche gebildet, deren Achse in den Positionen, die der Rasthebel 23 in den einzelnen Schaltstellungen des Schaltglieds 11 einnimmt, mit der Drehachse 14 des Schaltglieds 11 zusammenfällt. Somit ist die Feder 35 bzw. 36 in jeder Schaltstellung des Schaltglieds 11 gleich stark gespannt.

Bei der Ausführung nach Fig. 1 befindet sich die Rastkurve 20 an der Seite des Rasthebels 23, die der Schwenkachse 14 des Schaltglieds 11 zugewandt ist. Der Rastnocken 22 zeigt von der Drehachse 14 weg. Das Schaltglied 11 besitzt einen Ansatz 38, mit dem es sich bis jenseits des Rasthebels 23 erstreckt und der mit einem Einschnitt 39 versehen ist, durch den der Rasthebel 23 hindurch verläuft. Von der Drehachse 14 aus betrachtet, jenseits des Rasthebels 23 ist die Blattfeder 35 mit ihrem einen Ende in den Ansatz 38 hineingesteckt. Von der Befestigungsstelle aus erstreckt sich die Blattfeder 35 entlang des Rasthebels 23 bis an die Stelle, an der sie am Rücken 37 des Rasthebels 23 anliegt.

Bei der Ausführung nach den Fig. 2 und 3 befindet sich die Rastkurve 20 an der der Drehachse 14 des Schaltglieds 11 abgewandten Seite des Rasthebels 23. Das Schaltglied 11 besitzt wiederum einen mit einem Einschnitt 39 für den Rasthebel 23 versehenen Ansatz 38, der nun jedoch den auf die Drehachse 14 zugerichteten Rastnocken 22 trägt. Im Bereich zwischen den Lagerzapfen 12 und dem Einschnitt 39 ist in das Schaltglied 11 eine Sackbohrung 40 eingebracht, die zum Einschnitt 39 und damit zum Rücken 37 des Rasthebels 23 offen ist. In dieser Sackbohrung 40 liegt die Schraubenfeder 36. Diese ist also, anders als die Blattfeder 35 beim Ausführungsbeispiel nach Fig. 1, auf der der Lagerstelle des Schaltglieds 11 zugewandten Seite des Rasthebels 23 angeordnet. Die Schraubenfeder 36 stützt sich am Boden der Sackbohrung 40 ab und drückt einen Bolzen 41 als Zwischenglied gegen den Rücken 37 des Rasthebels 23. Der Bolzen 41, in den die Schraubenfeder 36 bis zu zwei kreuzweise angeordnete Rippen 42 eintaucht, ist in der Sackbohrung 40 längsverschiebbar geführt und liegt am Rücken 37 des Rasthebels 23 mit einem Boden 43, der dieselbe Krümmung wie der Rücken 37 des Rasthebels 23 besitzt, flächig an diesem an. Die Längsrichtung der Sackbohrung 40 verläuft radial zur Achse 14 des Schaltglieds 11, so daß die Schraubenfeder 36 in einer zur Drehachse 14 radialen Ebene liegt, insbesondere sich in einer zur Drehachse 14 radialen Richtung erstreckt. Wie die Fig. 2 erkennen läßt, ermöglicht eine derartige Anordnung ein sehr schmal bauendes Schaltglied.

Auch eine Blattfeder könnte man so anordnen, daß sie im wesentlichen in einer zur Drehachse 14 des Schaltglieds 11 radialen Ebene liegt. Zum Beispiel wäre dies dann der Fall, wenn sich eine Blattfeder im wesentlichen senkrecht zur Zeichenebene nach Fig. 1 erstreckt.

Die Federn 35 und 36 der beiden Ausführungsbeispiele liegen mit ihrem einen Ende am Rasthebel 23 und mittelbar am Rastnocken 22 und somit am Schaltglied 11 an. Mit ihrem anderen Ende stützen sie sich direkt am Schaltglied 11 ab. Die Federn 35 und 36 wirken also nur innerhalb eines Bauteils, nämlich des Schaltglieds 11, so daß dessen Lagerzapfen 12 und die entsprechenden Aufnahmen im Gehäuse 10 nicht belastet sind. Eine solche Art der Abstützung der den Rasthebel belastenden Federmitteln ist deshalb auch dann von Vorteil, wenn sich der Rastnocken am Rasthebel und die Rastkurve am Schaltglied befinden.

Die Ausführung nach den Figuren 2 und 3 besitzt gegenüber der nach Figur 1 außerdem noch den Vorteil, daß durch die bezüglich der Lagerstelle des Schaltglieds am Rasthebel außenliegende Rastkurve bei gleichem Schwenkwinkel des Schaltglieds der für die Ausbildung des Rastkurve ausnutzbare Weg größer ist als bei innenliegender Rastkurve. Dadurch kann die Rastkurve zumindest mit ihren Spitzen weiter auseinandergezogen und feiner abgestimmt werden. Umgekehrt erhält man kleinere Rastschritte, wenn man die außenliegende Rastkurve im Hinblick auf den Abstand der Raststellen wie eine innenliegende Rastkurve ausbildet.

## Patentansprüche

1. Elektrischer Schalter, insbesondere Lenkstockschalter für Kraftfahrzeuge, mit einem Schaltglied (11), das zwischen mehreren Schaltstellungen bewegbar, vorzugsweise drehbar, in einem Gehäuse (10) gelagert ist, mit einem gegen die Kraft von Federmitteln (35;36) durch einen Rastnocken (22) verschwenkbaren Rasthebel (23) und mit einer Rastkurve (20) sowie mit dem daran anliegenden Rastnocken (22) als Rastelelemente, die die Schaltstellungen des Schaltglieds (11) bestimmen, wobei sich die Rastkurve (20) am Rasthebel (23) und der Rastnocken (22) am Schaltglied (11) befinden, **dadurch gekennzeichnet**, daß die Federmittel (35,36) bei einer Verstellung des Schaltglieds (11) zusammen mit dem am Schaltglied befindlichen Rastelement (22) entlang des Rasthebels (23) bewegbt werden.

2. Elektrischer Schalter nach Anspruch 1, dadurch gekennzeichnet, daß die Federmittel (35;36) wenigstens annähernd gleich weit wie der Rastnocken (22) von der Schwenkachse des Rasthebels (23) entfernt an diesem angreifen.

3. Elektrischer Schalter nach Anspruch 1 oder 2, dadurch gekennzeichnet, daß die Federmittel (35,36) derart am Schaltglied (11) gehalten sind, daß sie bei einer Verstellung des Schaltglieds (11) von diesem mitgenommen werden.

4. Elektrischer Schalter nach Anspruch 3, dadurch gekennzeichnet, daß sich die Federmittel (35, 36), die einerseits am Rasthebel (23) angreifen, andererseits an Schaltglied (11) abstützen.

5. Elektrischer Schalter nach Anspruch 4, dadurch gekennzeichnet, daß der Rasthebel (23) durch einen Einschnitt (39) des Schaltglieds (11) hindurch verläuft.

6. Elektrischer Schalter nach Anspruch 3, 4 oder 5, dadurch gekennzeichnet, daß sich die Rastkurve (20) an der der Lagerstelle (12) des Schaltglieds (11) abgewandten Seite des Rasthebels (23) befindet, daß das Schaltglied (11) den Rasthebel (23) mit dem Rastnocken (22) umgreift und daß die Federmittel (36) auf der der Lagerstelle (12) des Schaltglieds (11) zugewandten Seite (37) des Rasthebels (23) angeordnet sind.

7. Elektrischer Schalter nach einem der vorhergehenden Ansprüche, dadurch gekennzeichnet, daß die Federmittel (35, 36) in mindestens zwei Schaltstellungen des Schaltglieds (11) gleich stark gespannt sind.

8. Elektrischer Schalter nach Anspruch 7, dadurch gekennzeichnet, daß die Angriffsstelle der Federmittel (35, 36) am Rasthebel (23) bei einer Verschwenkung des Schaltglieds (11) zwischen mindestens zwei benachbarten Schaltstellungen auf einem Kreisbogen verschoben wird, dessen Mittelpunkt in den beiden Schaltstellungen auf der Drehachse (14) des Schaltglieds (11) liegt.

9. Elektrischer Schalter nach Anspruch 8, dadurch gekennzeichnet, daß der Rasthebel (23) eine zylindrische Anlagefläche (37) für die Federmittel (35, 36) aufweist und daß die Achse der zylindrischen Anlagefläche (37) in den beiden Schaltstellungen mit der Drehachse (14) des Schaltglieds (11) zusammenfällt.

10. Elektrischer Schalter nach einem der vorhergehenden Ansprüche, dadurch gekennzeichnet, daß die Federmittel (36) im wesentlichen in einer zur Drehachse (14) des Schaltglieds (11) radialen Ebene (50) liegen.

11. Elektrischer Schalter nach Anspruch 10, dadurch gekennzeichnet, daß sich die Federmittel (36) im wesentlichen in einer zur Drehachse (14) des Schaltglieds (11) radialen Richtung erstrecken.

12. Elektrischer Schalter nach einem der vorhergehenden Ansprüche, dadurch gekennzeichnet, daß die Federmittel von einer Schraubenfeder (36), insbesondere von einer Schraubendruckfeder (36), gebildet werden.

13. Elektrischer Schalter nach Anspruch 12, dadurch gekennzeichnet, daß sich die Schraubenfeder (36) in einer Sackbohrung (40) des Schaltglieds (11) befindet.

14. Elektrischer Schalter nach einem der vorhergehenden Ansprüche, dadurch gekennzeichnet, daß die Federmittel (36) und der Rasthebel (23) in mindestens einer Schaltstellung des Schaltglieds (11) vorzugsweise über ein Zwischenglied (41) flächig aneinander anliegen.

## Claims

1. An electric switch, especially a steering column switch for motor vehicles, with a switching member (11) which is located in a housing (10) so as to be movable, preferably rotatable, between several switching positions, with a locking lever (23) that can be swivelled by way of a locking cam (22) against the force of resilient means (35; 36), and with a switch cam (20) and the locking cam (22) abutting thereon as locking elements which determine the switching positions of the switching member (11), the said switch cam (20) being provided on the locking lever (23) and the locking cam (22) being provided on the switching member (11), characterized in that the resilient means (35, 36) upon adjusting of the switching member (11) are moved along the locking lever (23) together with the locking element (22) disposed on the switching member.

2. An electric switch as claimed in claim 1,
characterized in that the resilient means (35; 36) make catch at the locking lever (23) at least approximately at the same distance as that of the locking cam (22) from the swivelling axis of the locking lever (23).

3. An electric switch as claimed in claim 1 or 2,
characterized in that the resilient means (35, 36) are retained on the switching member (11) such as to be entrained by said on adjusting of the switching member (11).

4. An electric switch as claimed in claim 3,
characterized in that the resilient means (35, 36) making catch at the locking lever (23), on the one hand, are supported on the switching member (11), on the other hand.

5. An electric switch as claimed in claim 4,
characterized in that the locking lever (23) extends through an indent (39) of the switching member (11).

6. An electric switch as claimed in claim 3, 4 or 5,
characterized in that the switch cam (20) is arranged on the side of the locking lever (23) turning away from the bearing point (12) of the switching member (11), in that the switching member (11) grips the locking lever (23) by means of the locking cam (22), and in that the resilient means (36) are arranged on the side (37) of the locking lever (23) facing the bearing point (12) of the switching member (11).

7. An electric switch as claimed in any one of the preceding claims,
characterized in that the resilient means (35, 36) are tensioned to the same extent in at least two switching positions of the switching member (11).

8. An electric switch as claimed in claim 7,
characterized in that, upon swivelling the switching member (11) between at least two adjacent switching positions, the point at which the resilient means (35, 36) act upon the locking lever (23) is moved on an arc of circle, the centre of which is - in the two switching positions - on the axis of rotation (14) of the switching member (11).

9. An electric switch as claimed in claim 8,
characterized in that the locking lever (23) comprises a cylindrical contact area (37) for the resilient means (35, 36), and in that in the two switching positions the axis of the cylindrical contact area (37) is identical with the axis of rotation (14) of the switching member (11).

10. An electric switch as claimed in any one of the preceding claims,
characterized in that the resilient means (36) substantially are in a plane (50) being radial with respect to the axis of rotation (14) of the switching member (11).

11. An electric switch as claimed in claim 10,
characterized in that the resilient means (36) substantially extend in a direction that is radial with respect to the axis of rotation (14) of the switching member (11).

12. An electric switch as claimed in any one of the preceding claims,
characterized in that the resilient means are formed by a helical spring (36), especially by a helical pressure spring (36).

13. An electric switch as claimed in claim 12,
characterized in that the helical spring (36) is arranged in a bottom bore (40) of the switching member (11).

14. An electric switch as claimed in any one of the preceding claims,
characterized in that the resilient means (36) and the locking lever (23), preferably via an intermediate member (41), are in surface contact with each other in at least one switching position of the switching member (11).

## Revendications

1. Commutateur électrique, notamment commutateur fixé à la colonne de direction pour véhicule automobile , comportant un organe de commutation (11), qui est monté dans un boîtier (10) de manière à être déplaçable, de préférence par rotation, entre plusieurs positions de commutation, un levier d'encliquetage (23) pouvant basculer sous l'effet d'un ergot d'encliquetage (22) à l'encontre de la force de moyens formant ressorts (35, 36), et une came d'encliquetage (20) formant avec l'ergot d'encliquetage (22) appliqué contre cette came, des éléments d'encliquetage qui déterminent les positions de commutation de l'organe de commutation (11), la came d'encliquetage (20) étant située sur le levier d'encliquetage (23) et l'ergot d'encliquetage (22) sur l'organe de commutation (11), caractérisé en ce que les moyens formant ressorts (35, 36) sont déplacés conjointement avec l'élément d'encliquetage (22) situé sur l'organe de commutation, le long du levier d'encliquetage (23), lors d'un déplacement de l'organe de commutation (11).

2. Commutateur électrique selon la revendication 1, caractérisé en ce que les moyens formant ressorts (35; 36) sont accrochés au levier d'encliquetage (23) en étant situés à peu près à la même distance de l'axe de pivotement du levier d'encliquetage, que celle existant entre la came d'encliquetage et ce levier.

3. Commutateur électrique selon la revendication 1 ou 2, caractérisé en ce que les moyens formant ressorts (35, 36) sont maintenus sur l'organe de commutation (11) de telle sorte que, lors d'un déplacement de cet organe de commutation (11), ils sont entraînés par ce dernier.

4. Commutateur électrique selon la revendication 3, caractérisé en ce que les moyens formant ressorts (35, 36), qui d'une part s'accrochent au levier de commutation (23), prennent appui par ailleurs sur l'organe de commutation (11).

5. Commutateur électrique suivant la revendication 4, caractérisé en ce que le levier d'encliquetage (23) pénètre dans une découpe (39) de l'organe de commutation (11).

6. Commutateur électrique selon la revendication 3, 4 ou 5, caractérisé en ce que la came d'encliquetage (20) est située sur le côté du levier d'encliquetage (23), qui est tourné à l'opposé du support (12) de l'organe de commutation (11), que l'organe de commutation (11) entoure le levier d'encliquetage (23) avec la came d'encliquetage (22) et que les moyens formant ressort (36) sont disposés sur la face (37) du levier d'encliquetage (23), qui est tournée vers le support (12) de l'organe de commutation (11).

7. Commutateur électrique selon l'une des revendications précédentes, caractérisé en ce que les moyens formant ressorts (35, 36) sont bandés avec la même force dans au moins deux positions de commutation de l'organe de commutation (11).

8. Commutateur électrique selon la revendication 7, caractérisé en ce que, lors du pivotement de l'élément d'encliquetage (11) dans au moins deux positions de commutation voisines, le point d'accrochage des moyens formant ressorts (35, 36) sur le levier d'encliquetage (22, 23) se déplace sur un cercle, dont le centre est situé sur l'axe de rotation (14) de l'organe de commutation (11), dans les deux positions de commutation.

9. Commutateur électrique selon la revendication 8, caractérisé en ce que le levier d'encliquetage (23) possède une surface d'appui cylindrique (37) pour les moyens formant ressorts (35, 36), et que l'axe de la surface d'application cylindrique (37) coïncide avec l'axe de rotation (14) de l'organe de commutation (11), dans les deux positions de commutation.

10. Commutateur électrique selon l'une des revendications précédentes, caractérisé en ce que les moyens formant ressort (36) sont situés essentiellement dans un plan (50), qui est radial par rapport à l'axe de rotation (14) de l'organe de commutation (11).

11. Commutateur électrique selon la revendication 10, caractérisé en ce que les moyens formant ressort (36) s'étendent essentiellement dans une direction radiale par rapport à l'axe de rotation (14) de l'organe de commutation (11).

12. Commutateur électrique selon l'une des revendications précédentes, caractérisé en ce que les moyens formant ressort sont formés par un ressort hélicoïdal (36), notamment par un ressort hélicoïdal de pression (36).

13. Commutateur électrique selon la revendication 12, caractérisé en ce que le ressort hélicoïdal (36) est situé dans un perçage borgne (40) de l'organe de commutation (11).

14. Commutateur électrique selon l'une des revendications précédentes, caractérisé en ce que les moyens formant ressorts (36) et le levier d'encliquetage (23) s'appliquent de préférence par une certaine surface l'un contre l'autre, moyennant l'interposition d'un élément intercalaire (41), pour au moins une position de commutation de l'organe de commutation.
